(19) Europäisches Patentamt
European Patent Office
Office européen des brevets

(11) Publication number: **0 046 813**
**B1**

(12) **EUROPEAN PATENT SPECIFICATION**

(45) Date of publication of patent specification: **06.06.84**

(51) Int. Cl.³: **B 01 D 13/04, C 08 J 5/18**

(21) Application number: **80104992.5**

(22) Date of filing: **21.08.80**

(54) **A semipermeable membrane.**

(43) Date of publication of application:
**10.03.82 Bulletin 82/10**

(45) Publication of the grant of the patent:
**06.06.84 Bulletin 84/23**

(84) Designated Contracting States:
**DE FR GB IT**

(56) References cited:
**DE - A - 2 264 195**
**GB - A - 602 974**
**US - A - 2 317 725**
**US - A - 3 373 056**

(73) Proprietor: **TORAY INDUSTRIES, INC.**
**2, Nihonbashi Muromachi 2-chome Chuo-ku**
**Tokyo 103 (JP)**

(72) Inventor: **Kurihara, Masaru**
**2-15 Sonoyama**
**Ohtsu-shi Shiga-ken (JP)**
Inventor: **Harumiya, Noriho**
**8-17 Wakabadai**
**Ohtsu-shi Shiga-ken (JP)**
Inventor: **Uemura, Tadahiro**
**18-2-502 Nagitsujihigashiura-cho**
**Yamamshina-ku**
**Kyoto-shi Kyoto-fu (JP)**

(74) Representative: **Wey, Hans-Heinrich, Dipl.-Ing. et al,**
**Patentanwälte Müller-Börner Wey & Körner**
**Widenmayerstrasse 49**
**D-8000 München 22 (DE)**

**EP 0 046 813 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a semipermeable membrane for liquid separation having improved rejection performance, especially to reverse osmosis membranes and ultrafiltration membranes, and also to a process for preparation of such semipermeable membranes. Furthermore, the invention is directed to a process for improving the salt rejection of semipermeable membranes made of cellulose esters, and finally to the use of said semipermeable membranes in a process for desalination of saline water by reverse osmosis.

In recent years, much research and development has taken place in an effort to obtain an excellent semipermeable membrane which is useful for producing fresh or potable water from such sources as sea water or brackish water, for the treatment of polluted water, for the concentration of orange juice or milk and for the recovery of useful materials from such sources as metal plating sewage or electrodeposition painting sewage. This is desirable because such procedures are in need of no phase transition, no temperature change and use less energy than other purification methods.

In general, the membrane performance of a reverse osmosis membrane is expressed in terms of both solvent permeability and solute rejection. Solvent permeability is the quantity of permeated solvent per unit period and unit area, generally in terms of $m^3/m^2$ day. Solute rejection (%) is calculated as follows:

$$\text{Solute Rejection (\%)} = (1 - \frac{C}{C_o}) \times 100 \text{ wherein}$$

$C_o$ is the concentration of solute in the feed solution and C is the concentration of solute in the permeated solution.

At the present time, semipermeable membranes produced for reverse osmosis are composed of either asymmetric membranes or composite membranes.

Asymmetric membranes have been produced from various polymeric materials such as cellulose derivatives, polyamides, polyimides, polybenzimidazoles, polyarylene oxides, polysulfonamides and other polymeric materials, in which the semipermeability of the membrane results from the function of a thin dense skin layer located at one surface of the membrane, with the remaining major part of the membrane providing a more porous supporting layer formed by the same polymer.

On the other hand, the composite membranes such as those called "PA-300" and NS-200", etc. have been developed recently, wherein the semipermeability results from the function of an ultrathin solute barrier layer of one material which is formed separately and is supported on an underlying porous substrate that may be made from a different polymer from the ultrathin film.

The performance of the membrane is determined by the thickness of the thin dense skin layer or the ultrathin solute barrier layer. Accordingly, a thinner layer leads the membrane to higher performance, especially in respect of solvent permeability.

It is accordingly difficult to obtain a high performance semipermeable membrane having good solute rejection, because the thin dense skin layer or the ultrathin solute barrier layer possesses poor resistance to deformation and abrasion at the time of membrane fabrication and of membrane element fabrication. In addition, when a semipermeable membrane made of cellulose acetate has been used for substantial periods of time, the decrease of rejection performance of the membrane may have been caused by hydrolysis of the membrane. Moreover, when semipermeable membranes or membrane elements are free of faults, defects in the thin dense skin layer or the ultrathin solute barrier layer may be caused by minor mechanical shocks or deformation during long term operation of reverse osmosis or ultrafiltration. Therefore, it is important to be able to treat the membrane with a supplemental material in order to improve or to rejuvenate the solute rejection performance of the membrane.

Various materials have been hitherto proposed for improving the rejection performance of semipermeable membranes. For example, U.S. Patent No. 3,877,978 discloses such treatment using a supplemental polymeric material containing a substantial amount of acetyl groups comprising a copolymer of vinyl acetate and acids such as maleic acid, crotonic acid and lower alkyl esters of acrylic acid.

G.L. Dalton et al have recently reviewed the supplemental polymer coatings in reverse osmosis improvement and regeneration in "DESALINATION" 24, 235 (1978). But these materials could only be applied for rejuvenating a membrane which has degenerated over long term operation, or which has a mechanical defect.

GB—A—602 974 discloses aqueous solutions of polyvinyl acetate derivatives, particularly of an acid ester of a partially esterified polyvinyl alcohol, in which the vinyl alcohol groups are partly esterified by one or more polybasic acids and partly acetylated and partly unreplaced. These aqueous solutions have a greatly improved stability especially in the presence of water-soluble electrolytes. Thus, these solutions are used as emulsifying agents, for example for mineral oils.

It is an object of the present invention to provide a semipermeable membrane which can be rejuvenated after having degenerated and which can be improved without proportional decrease in the flow rate of water therethrough, which improvement is carried out by a proper membrane treating agent without troublesome procedures in use.

In accordance with the present invention, the yield rate of the membrane and of the element can be heightened by applying the membrane treatment for overcoming the defects. The useful life of the membrane can be lengthened by means of the rejuvenation treatment. A high performance, particularly rejection performance of the membrane, can be attained with a membrane treating agent of this invention to a previously unattained level.

In the description which follows specific characterizations will be used and reference will be had to drawings and to specific examples all in the interest of clarity of explanation.

IN THE DRAWINGS

The Figure is a diagram showing change of the membrane performance of a semipermeable membrane treated with a membrane treating agent of the present invention. In the drawing,

(1) represents initial membrane performance;
(2) represents degenerated membrane performance;
(3) represents rejuvenated membrane performance and
(4) represents improved membrane performance.

Referring now to the modified vinyl polymers which are effective for rejuvenating and improving a rejection performance of semipermeable membranes in accordance with the present invention, each has an acetoxy group and at least one group comprising either or both of the Formulas (I) and (II):

(I) $$-O\overset{O}{\overset{\|}{C}}-R-(-COOH)_n$$

(II) $$-O-R-(-COOH)_n$$

wherein R is a radical selected from the group consisting of aliphatic, aromatic and heterocyclic radicals having 1 to 9 carbon atoms, and n is an integer from 1 to 3.

Examples of groups represented by the Formula (I) are the following groups represented by the Formulas (A) to (G), the preferable ones being (A) and (B):

(A) $$-O\overset{O}{\overset{\|}{C}}-CH{=}CH-COOH$$

(B) $$-O\overset{O}{\overset{\|}{C}}-CH_2-CH_2-COOH$$

(C) $$-O\overset{O}{\overset{\|}{C}}-C_6H_4-COOH$$

(D) $$-O\overset{O}{\overset{\|}{C}}-C_6H_3-(COOH)_2$$

(E) 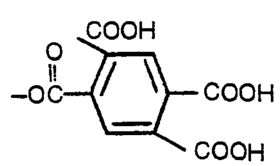

(F) $$-O\overset{O}{\overset{\|}{C}}-CH_2-\underset{COOH}{\underset{|}{CH}}-\overset{COOH}{\overset{|}{CH}}-CH_2-COOH$$

(G) $$-O\overset{O}{\overset{\|}{C}}-CH_2-\underset{COOH}{\underset{|}{CH}}-CH_2-COOH$$

Examples of the groups represented by Formuls (II) are the following:

(H) $-O-CH_2COOH$

(J) $-O-CH_2CH_2COOH$

The modified vinyl polymers can be derived from homopolymers or copolymers of vinyl acetate. Ethylene, vinyl chloride, styrene, N-vinyl pyrrolidone etc. can be employed as a comonomer with vinyl acetate.

Preferred modified vinyl polymers of the present invention are polymers having repeating units represented by the Formula (III) as the polymer main chain:

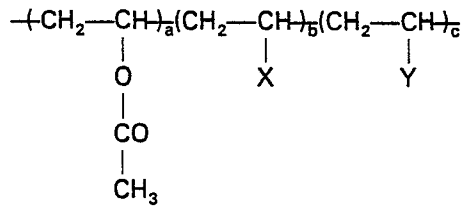

(III)

wherein a, b and c are molar fractions which satisfy the following equations:

$$a + b + c = 1 \qquad 0.9 > a > 0.2$$

$$0.8 > b > 0.1$$

$$0.4 > c \geqq 0$$

and wherein X is at least one radical selected from the group represented by the Formulas (I) and (II) and Y is at least one radical selected from the group consisting of $-OH$, $-H$, $-Cl$, $-Br$, $-I$, $-C_6H_5$, and

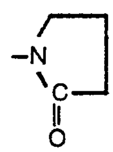

Such groups represented by the Formulas (I) and (II) alter the vinyl polymer into a water soluble vinyl polymer having excellent affinity and adsorption-ability for semipermeable membranes, particularly for membranes made of cellulose acetate.

By treating a semipermeable membrane with an effective amount of a modified vinyl polymer containing an acetoxy group and a group represented by the Formulas (I) and (II), the rejection performance of the membrane can be remarkably potentiated, even if the modified vinyl polymer is not insolubilized. The modification is well achieved by reacting polyvinyl acetate, its copolymers and their partially or fully saponified polymers, with at least one compound selected from the group consisting of dibasic acids, tribasic acids, tetrabasic acids, acid anhydrides thereof and/or acid chlorides thereof.

The more preferred modified vinyl polymers used in the present invention are modified polymers having the group represented by the Formula (A) or (B) and are obtained by reacting a partially saponified vinyl acetate with maleic anhydride or succinic anhydride. The molar fractions a, b and c in the modified vinyl polymer represented by the Formula (III) should satisfy the aforementioned equations, and should preferably satisfy the following equation:

$$0.8 > a > 0.4$$

$$0.4 > b > 0.1$$

$$0.2 > c \geqq 0$$

When the molar fractions a, b and c do not satisfy the above equations, it is not possible to obtain a modified vinyl polymer having good water solubility and excellent capacity for rejuvenating or improving the rejection performance of the membrane. Such modified vinyl polymers can be easily prepared by methods well known in prior art, for example those disclosed in Japanese Patent Publication No. 16,150/1965. One of the representative methods for preparing the modified vinyl polymers is as follows:

1) hydrolysing or saponifying a polyvinyl acetate with aqueous alkali or acid solutions,

2) reacting a partially saponified polyvinyl acetate with various carboxylic acids, for example, a dibasic acid such as succinic acid, maleic acid, phthalic acid, tribasic acids such as propane tricarboxylic acid, trimellitic acid, tetrabasic acids such as butane tetracarboxylic acid and pyrromellitic acid, and their acid anhydrides and their halides as well.

The modified vinyl polymers of the present invention may also be obtained by reacting a partially saponified polyvinyl acetate with acrylonitrile or cyan ions and formaldehyde, and then hydrolising the resulting cyanomethylated or cyanoethylated polyvinyl acetate. The water solubility of the modified vinyl polymers obtained by reacting the partially saponified polyvinyl acetate with the carboxylic acids depends on the reaction ratio of the carboxylic acids to the partially saponified vinyl polymers. When the reaction ratio of the carboxylic acids to the partially saponified vinyl acetate is lower, the solubility of the modified polymers becomes poor. However, these modified vinyl polymers can be converted to water soluble polymers by controlling the pH in an aqueous solution by adding alkali hydroxides such as sodium hydroxide, potassium hydroxide or ammonium hydroxide, organic amines, etc. By changing the water solubility (pH) of the modified vinyl polymers before and after treating the semipermeable membrane, rejection performance and performance durability of the semipermeable membrane can be controlled. But the modified vinyl polymers of the present invention have such good affinity and absorption-ability relative to the semipermeable membrane, that the membrane treating effect does not disappear even after long-term operation.

The content of acetoxy groups contained in the modified vinyl polymers is preferably within the range of about 20 to 90 mol%, more preferably about 40 to 80 mol% relative to the repeating units of the modified vinyl polymer chain. The insolubilization or fixation of the modified vinyl polymers may be achieved by adding various reagents which have reactivity to the groups represented by the Formula (I). Examples of such reagent include multivalent organic amines, etc.

The membrane treating agent of the present invention may be applied to semipermeable membranes having various shapes such as films, tubes, or hollow fibers, or Leob type asymmetric or composite membranes which comprise various organic polymers such as cellulose esters, polyamides, polybenzimidazoles, etc. The membrane treating agents of the present invention give an excellent effect to the semipermeable membrane comprising cellulose esters, particularly cellulose acetate.

The membrane treating agents of the present invention are employed as either aqueous solutions, organic solvent solutions or dispersions, etc. containing an effective amount of the modified vinyl polymer. However, the membrane treating agents are usually used as aqueous solutions containing about 0.0001 to 1.0% by weight, preferably about 0.0003 to 0.01% by weight of the modified vinyl polymer. The pH of such aqueous solution is preferably about 3 to 9, more preferably about 4 to 8. The addition of surfactant to the aqueous solution may give good effects in some cases.

Membrane treating can be achieved by well-known methods, for example dipping the membrane into the aqueous solution containing the membrane treating agent, spraying the aqueous solution on the membrane or, more easily, the membrane treating agent may be added to the feed solution during the operation of the reverse osmosis or ultrafiltration procedure.

The following examples are illustrative of the invention:

Example 1

A modified vinyl polymer was prepared by reacting partically saponified polyvinyl acetate with maleic anhydride as follows:

10 grams of partically saponified polyvinyl acetate (average molecular weight (MW):1700, degree of saponification: (40%) was dissolved in 100 milliliters of dimethylsulfoxide, after which 20 grams of maleic anhydride were added and stirred for 24 hours at room temperature. A white polymeric material was obtained by mixing the aforementioned solution with 500 milliliters of water. The material was filtered, washed with 100 milliliters of water and then dried for 24 hours in a vacuum.

This polymer was dissolved in a dilute ammonia water and was stored as a 10% solution having a pH of 7, at a room temperature. The infrared spectra of this polymer showed strong adsorption at 1730 $cm^{-1}$(ester linkage $\nu$ C=O) and 1240 $cm^{-1}$ (esteric $\nu$ C—O), and a new absorption at 1575 $cm^{-1}$ (ionic carboxylate).

Example 2

A cellulose acetate asymmetric reverse osmosis membrane was evaluated under the following conditions:

| | | |
|---|---|---|
| Feed | : | 3.5% sodium chloride |
| Temperature | : | 25°C |
| Operating pressure | : | 0.56 $N/mm^2$ |
| Flow Rate | : | 1 m/s |

Initially, the asymmetric membrane exhibited a salt rejection of 98.7% and a water flux of 0.30 $m^3/m^2$ day. The modified vinyl polymer obtained in Example 1 was added to a feed solution (3.5% sodium chloride) so that the polymer was supplied to the membrane at about 100 ppm while the evaluation was continued. After one hour, salt rejection improved to 99.35% and water reflux was reduced to 0.25 $m^3/m^2$ day. After this the feed solution was changed to fresh 3.5% sodium chloride; performance improved by the treatment was maintained even after 24 hours test.

This effect is illustrated in the drawings. The number (1) designates initial membane performance, and (4) in the drawing is improved membrane performance after treatment by this example.

Example 3

A modified vinyl polymer was prepared by using succinic anhydride instead of maleic anhydride. The other conditions were the same as Example 1.

The cellulose acetate asymmetric reverse osmosis membrane before treatment exhibited a salt rejection of 97.27% and a water flux of 0.36 $m^3/m^2$ day under the same conditions as Example 2. Membrane treatment was accomplished by adding the modified vinyl polymer to the feed solution at 10 ppm, while the evaluation was continued. After 24 hours the salt rejection improved to 99.37% and the water flux was reduced to 0.33 $m^3/m^2$ day. This performance did not change after 24 hours' operation on a fresh sodium chloride solution.

Example 4

A cellulose acetate asymmetric membrane was immersed in an aqueous solution containing 0.15% of sodium bicarbonate and sodium carbonate for 20 hours at 30°C, in which the pH was 11. By this immersion the membrane performance was reduced by hydrolysis, the salt rejection decreased to 95.0% from 98.0% and the water flux increased to 0.70 $m^3/m^2$ day from 0.60 $m^3/m^2$ day under the following conditions:

| | |
|---|---|
| Feed | : 0.25% sodium chloride |
| Temperature | : 25°C |
| Operating pressure | : 0.3 $N/mm^2$ |

30 ppm of the modified vinyl polymer obtained in Example 1 were added to the solution and the evaluation was continued for an hour. Then membrane performance was rejuvenated, and found to exhibit a salt rejection of 97.7% and a water flux of 0.60 $m^3/m^2$ day, which was maintained after 24 hours' operation using a fresh feed solution.

Example 5

Asymmetric cellulose acetate membranes were piled on a polyethylene net ("Vexar" made be E.I. duPont de Nemours & Co.) and evaluated under the following conditions:

| | |
|---|---|
| Feed | : 0.15% NaCl |
| Operating pressure | : 0.3 $N/mm^2$ |
| Temperature | : 25°C |

The membrane performance was degenerated by deformation. The membrane treatment was performed by using the modified vinyl polymer of Example 1, while the concentration was changed. The results are listed in Table 1.

TABLE 1

| Before Treatment (degenerated) Rejection (%) | | Water flux ($m^3/m^2$ day) | Modified Vinyl Polymer concentration (ppm) | After Treatment (one hour) Rejection (%) | | Water flux ($m^3/m^2$ day) |
|---|---|---|---|---|---|---|
| 80.1 | — | 1.13 | 0.5 | 95.8 | — | 0.76 |
| 82.7 | — | 1.06 | 7.5 | 97.8 | — | 0.67 |
| 82.5 | — | 1.08 | 15.0 | 98.0 | — | 0.67 |
| 82.5 | — | 1.10 | 30 | 98.5 | — | 0.60 |

Example 6

The spirally wound cellulose acetate membrane element for sea water desalination (SC-5100 made by Toray Inc. of Tokyo, Japan), exhibited a salt rejection of 96% and a water flux of 2.1 $m^3$ day element under the following conditions:

| | |
|---|---|
| Operating pressure | : 0.56 $N/mm^2$ |
| Brine Flow Rate | : 8 Liters/min. |
| Recovery | : 16% |
| Feed Concentration | : 3.5% sodium chloride |

30 ppm of modified vinyl polymer was added to the feed solution, and after 5 hours' operations the salt rejection was improved to 99.24% and the water flux was reduced to 1.6 $m^3$ day element. This performance was maintained for 24 hours after the feed solution was changed to a fresh 3.5% sodium chloride solution.

Example 7

A spirally wound cellulose acetate membrane element for brackish water desalination (SC-3100 made by Toray, Inc. of Tokyo Japan) exhibited 98.1% salt rejection and 3.91 $m^2$ day, element water flux under the following conditions:

| | |
|---|---|
| Operating pressure | : 0.3 $N/mm^2$ |
| Temperature | : 25°C |
| Feed Solution | : 0.15% sodium chloride |
| Recovery | : 30% |

The membrane treatment was performed as in Example 6. After 5 hours' operation salt rejection improved to 99.3% and the water flux was 3.33 $m^3$ day. element. Improved performance was maintained after 540 hours operation followed by treatment; the membrane exhibited 99.2% salt rejection and 3.2 $m^3$ day.element water flux.

Example 8

A cellulose acetate asymmetric reverse osmosis membrane was evaluated in the same manner as in Example 2, but the membrane was deformed as in Example 5. The membrane performance was 88% salt rejection and 0.4 $m^3/m^2$. day water flux. This membrane was regenerated to 97% salt rejection and 0.32 $m^3/m^2$ day water flux, after the membrane treatment using an aqueous solution containing 50 ppm of the modified vinyl polymer of Example 1. This effect is also illustrated in Figure 1, where (2) is degenerated membrane performance and (3) is rejuvenated membrane performance.

Example 9

A two stage water desalination system using spirally wound cellulose acetate membrane elements was degenerated after 4000 hours operation. The degenerated performance of the first stage was rejuvenated by applying the membrane treating agent of Example 3.

The rejection performance of the membrane element recovered from 91% to 93% with slight decrease of flux. The membrane treating agent was added at a level of 5 ppm in sea water for 10 minutes. This effect was maintained after 2000 hours operation which followed.

**Claims**

1. A semipermeable membrane for liquid separation having improved rejection performance, in which the semipermeable membrane has attached thereto an effective amount of a modified vinyl polymer having an acetoxy group and at least one group selected from the group consisting of:

$$\text{(I)} \quad -O\overset{O}{\overset{\|}{C}}-R-(-COOH)_n \text{ and}$$

$$\text{(II)} \quad -O-R-(-COOH)_n$$

wherein R is a radical selected from the group consisting of aliphatic, aromatic and heterocyclic radicals having from 1 to 9 carbon atoms, and n is an integer from 1 to 3.

2. A semipermeable membrane according to Claim 1, wherein the group represented by the Formulas (I) and (II) comprises at least one group selected from the group consisting of :

(A) 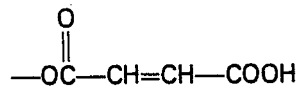

(B) 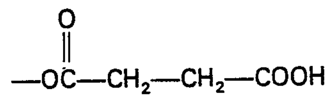

(C) 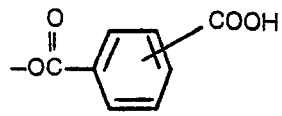

(D) 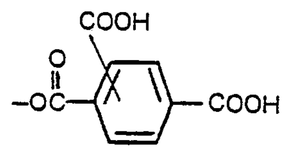

(E) 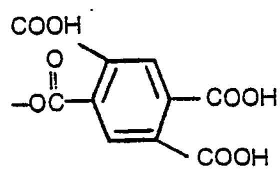

(F) 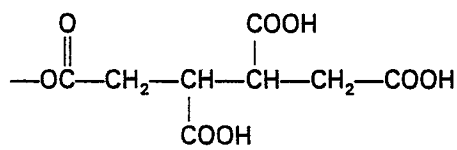

(G) 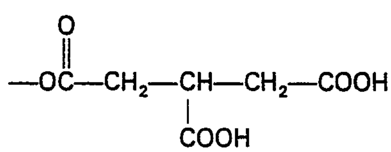

(H) $—O—CH_2—COOH$

(J) $—O—CH_2—CH_2—COOH$

3. A semipermeable membrane according to Claim 1, wherein said modified vinyl polymer is a vinyl polymer derived from a homopolymer or copolymers of vinylacetate.

4. A semipermeable membrane according to Claim 1, wherein the said modified vinyl polymer is a vinyl polymer represented by the Formula (III):

(III) 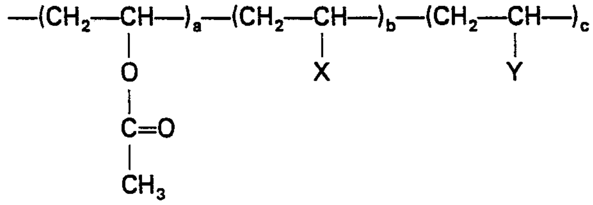

wherein a, b and c are molar fractions and satisfy the following equations:

$$a + b + c = 1$$
$$0.9 > a > 0.2$$
$$0.8 > b > 0.1$$
$$0.4 > c \geqq 0$$

X is at least one radical selected from the group represented by the Formulas (I) and (II), Y is at least one radical selected from the group consisting of —OH, —H, —Cl, —Br, —I, —$C_6H_5$ and

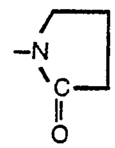

5. A semipermeable membrane according to Claim 4, wherein X is at least one radical selected from the group represented by the Formulas (A) to (J) in Claim 2, especially by Formula (A) or (B).

6. A semipermeable membrane according to Claim 4 or 5, wherein Y is —OH.

7. A semipermeable membrane according to Claim 4, wherein a, b and c satisfy the following equations:

$$0.8 > a > 0.4$$
$$0.4 > b > 0.1$$
$$0.2 > c \geqq 0$$

8. A semipermeable membrane according to Claim 1, wherein said modified vinyl polymer is derived from at least one polymer selected from the group consisting of polyvinyl acetate, copolymers comprising the reaction product of vinyl acetate and at least one comonomer of ethylene, vinyl chloride, styrene, N-vinyl pyrrolidone, and their partially or fully saponified polymers.

9. A semipermeable membrane according to Claim 1, wherein the modified vinyl polymer is a polymer comprising the reaction product of (a) polyvinyl acetate, its copolymers and their partially or fully saponified polymers and (b) at least one compound selected from the group consisting of dibasic acids, tribasic acids, tetrabasic acids, and anhydrides thereof and acid chlorides thereof.

10. A semipermeable membrane according to Claim 1, wherein the semipermeable membrane comprises cellulose ester.

11. A semipermeable membrane according to Claim 1, wherein the semipermeable membrane comprises cellulose acetate or mixture of cellulose acetate and another cellulose ester.

12. A semipermeable membrane according to Claim 1, wherein the semipermeable membrane has at least about 98.5%—99.0% of rejection performance operated at 0.3 N/mm², with an aqueous solution containing by weight 0.5% NaCl, at a temperature of 25°C, and at a pH of 6.

13. A process for preparation of a semipermeable membrane for liquid separation according to one or more of the Claims 1 to 12, comprising applying to the surface of a cellulose ester semipermeable membrane an aqueous solution containing a modified vinyl polymer having an acetoxy group and at least one group represented by the Formulas (I) and (II):

(I) $—\underset{\substack{\Vert \\ O}}{C}O—R—(—COOH)_n$

and

(II) $—O—R—(COOH)_n$

wherein R is a radical selected from the group consisting of aliphatic, aromatic and heterocyclic radicals having from 1 to 9 carbon atoms, and n is an integer from 1 to 3.

14. A process according to Claim 13, wherein the aqueous solution contains about 0.0001 to about 1%, preferably about 0.0003 to 0.01% by weight of the modified vinyl polymer.

15. A process according to Claim 14, wherein the aqueous solution has a pH of about 3 to 9, preferably about 4 to 8.

16. A process for improving the salt rejection of a semipermeable membrane made of cellulose ester by contacting the membrane with an aqueous solution containing a modified vinyl polymer having an acetoxy group and at least one group represented by the Formulas (I) and (II) in Claim 13.

17. Use of a semipermeable membrane in a process for desalination of saline water by reverse osmosis, the steps comprising (a) contacting the saline water under pressure with a reverse osmosis

membrane comprising a cellulose ester, and (b) thereafter treating the reverse osmosis membrane by the process according to Claims 13 to 15 to provide the membrane having at least about 98% of salt rejection.

18. The use of a modified vinyl polymer as described in any of claims 1 to 9 in an effective amount in an agent for the treatment of semipermeable membranes to improve the rejection performance and rejuvenate the membranes.

## Revendications

1. Membrane semi-perméable pour la séparation de liquide ayant une performance de rejet améliorée, où la membrane semi-perméable a, fixée dessus, une quantité efficace d'un polymère vinylique modifié ayant un groupe acétoxy et au moins un groupe choisi dans le groupe se composant de:

(I) 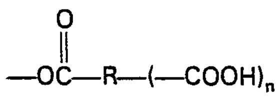 et

(II) $—O—R—(—COOH)_n$

où R est un radical choise dans le groupe se composant de radicaux aliphatiques, aromatiques et hétérocycliques ayant 1 à 9 atomes de carbone et n est un nombre entier de 1 à 3.

2. Membrane semi-perméable selon la revendication 1, dans laquelle le groupe représenté par les formules (I) et (II) comprend au moins un groupe choisi dans le groupe se composant de:

(A) 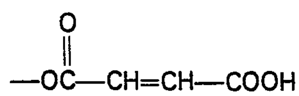

(B) 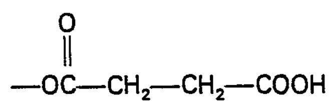

(C) 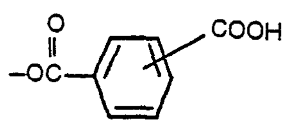

(D) 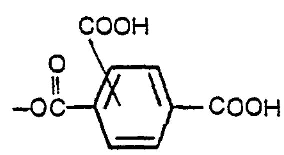

(E) 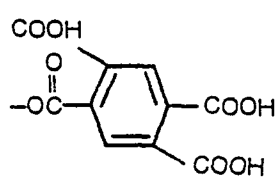

(F) 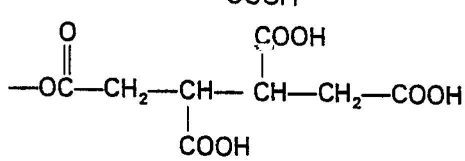

(G) 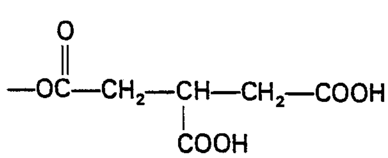

(H) $-O-CH_2-COOH$

(J) $-O-CH_2-CH_2-COOH$

3. Membrane semi-perméable selon la revendication 1, dans laquelle le polymère vinylique modifié est un polymère vinylique provenant d'un homopolymère ou de copolymères d'acétate de vinyle.

4. Membrane semi-perméable selon la revendication 1, dans laquelle de polymère vinylique modifié est un polymère vinylique représenté par la formule (III):

(III) 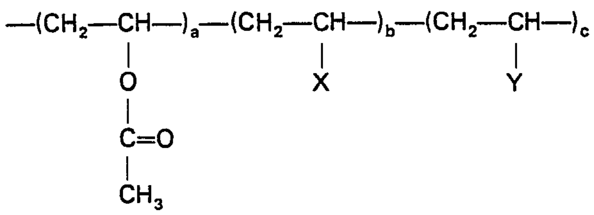

où a, b et c sont des fractions molaires et satisfont aux équations suivantes:

$$a + b + c = 1$$

$$0,9 > a > 0,2$$

$$0,8 > b > 0,1$$

$$0,4 > c \geqq 0$$

X est au moins un radical choisi dans le groupe représenté par les formules (I) et (II), Y est au moins un radical choisi dans le groupe se composant de —OH, —H, —Cl, —Br, —I, $-C_6H_5$ et

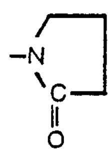

5. Membrane semi-perméable selon la revendication 4, dans laquelle X est au moins un radical choisi dans le groupe représenté par les formules (A) à (J) dans la revendication 2, spécialement par le formule (A) ou la formule (B).

6. Membrane semi-perméable selon la revendication 4 ou 5, dans laquelle Y est —OH.

7. Membrane semi-perméable selon la revendication 4, dans laquelle a, b et c satisfont aux équations suivantes:

$$0,8 > a > 0,4$$

$$0,4 > b > 0,1$$

$$0,2 > c \geqq 0$$

8. Membrane semi-perméable selon la revendication 1, dans laquelle le polymère vinylique modifié provient d'au moins un polymère choisi dans le groupe se composant d'acétate de polyvinyle, de copolymères comprenant le produit réactionnel d'acétate de vinyle et d'au moins un comonomère constitué par l'éthylène, le chlorure de vinyle, le styrène, la N-vinylpyrrolidone et leurs polymères totalement ou partiellement saponifiés.

9. Membrane semi-perméable selon la revendication 1, dans laquelle le polymère vinylique modifié est un polymère comprenant le produit réactionnel de (a) de l'acétate de polyvinyle, ses copolymères et leurs polymères partiellement ou totalement saponifiés et (b) au moins un composé choisi dans le groupe se composant d'acides dicarboxyliques, d'acides tricarboxyliques, d'acides tétracarboxyliques, de leurs anhydrides d'acides et de leurs chlorures d'acides.

10. Membrane semi-perméable selon la revendication 1, dans laquelle la membrane semi-perméable comprend un ester de cellulose.

11. Membrane semi-perméable selon la revendication 1, dans laquelle la membrane semi-perméable comprend de l'acétate de cellulose ou un mélange d'acétate de cellulose et d'un autre ester de cellulose.

12. Membrane semi-perméable selon la revendication 1, dans laquelle la membrane semi-perméable a au moins une performance de rejet d'environ 98,5%—99,0% pour un fonctionnement sous 0,3 N/mm², avec une solution aqueuse contenant en poids 0,5% de NaCl, à une température de 25°C et à un pH de 6.

13. Procédé pour la préparation d'une membrane semi-perméable pour la séparation de liquide selon une ou plusieurs des revendications 1 à 12, consistant à appliquer à la surface d'une membrane semi-perméable en ester de cellulose une solution aqueuse contenant un polymère vinylique modifié ayant un groupe acétoxy et au moins un groupe représenté par les formules (I) et (II):

(I) $$-O\overset{}{\underset{\underset{O}{\|}}{C}}-R-(-COOH)_n$$

et

(II) $$-O-R-(COOH)_n$$

où R est un radical choisi dans le groupe se composant de radicaux aliphatiques, aromatiques et hétérocycliques ayant 1 à 9 atomes de carbone et n est un nombre entier de 1 à 3.

14. Procédé selon la revendication 13, dans lequel la solution aqueuse contient environ 0,0001 à environ 1%, de préférence environ 0,0003 à 0,01% en poids du polymère vinylique modifié.

15. Procédé selon la revendication 14, dans lequel la solution aqueuse a un pH d'environ 3 à 9, de préférence environ 4 à 8.

16. Procédé pour améliorer le rejet de sel d'une membrane semi-perméable constituée d'ester de cellulose en mettant en contact le membrane avec une solution aqueuse contenant un polymère vinylique modifié ayant un groupe acétoxy et au moins un groupe représenté par les formules (I) et (II) dans la revendication 13.

17. Utilisation d'une membrane semi-perméable dans un procédé pour le dessalement d'eau salée par osmose inverse, les étapes consistant (a) à mettre en contact l'eau salée sous pression avec une membrane d'osmose inverse comprenant un ester de cellulose, et (b) ensuite à traiter la membrane d'osmose inverse par le procédé selon les revendications 13 à 15 pour fournir la membrane ayant un rejet de sel d'au moins environ 98%.

18. Utilisation d'un polymère vinylique moidifié comme décrit dans l'une quelconque des revendications 1 à 9, en quantité efficace dans un agent pour le traitement de membranes semi-perméables pour améliorer la performance de rejet et rajeunir les membranes.

**Patentansprüche**

1. Semipermeable Membran zum Trennen von Flüssigkeiten mit verbesserter Sperrleistung, wobei an die semipermeable Membran eine effektive Menge eines modifizierten Vinylpolymeren mit einer Acetoxygruppe und mindestens einer Gruppe der Formel

(I) $$-O\overset{\overset{O}{\|}}{C}-R-(-COOH)_n,$$ und/oder

(II) $$-O-R-(COOH)_n$$

gebunden ist, wobei R eine aliphatische, aromatische oder heterocyclische Gruppe mit 1 bis 9 Kohlenstoffatomen und n eine ganze Zahl von 1 bis 3 ist.

2. Semipermeable Membran nach Anspruch 1, dadurch gekennzeichnet, daß die durch die Formeln (I) und (II) repräsentierten Gruppen aus den Gruppen

(A) $$-O\overset{\overset{O}{\|}}{C}-CH{=}CH-COOH$$

(B) $$-O\overset{\overset{O}{\|}}{C}-CH_2-CH_2-COOH$$

(C) 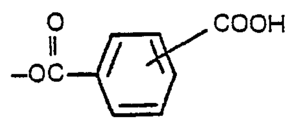

(D) 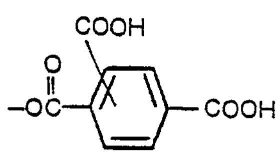

(E) 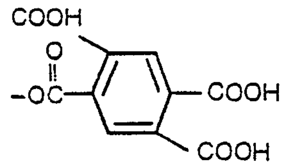

(F) 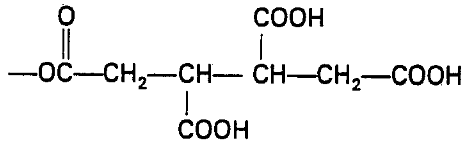

(G) 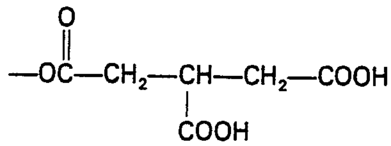

(H) $—O—CH_2—COOH$

(J) $—O—CH_2—CH_2—COOH$

ausgewählt sind.

3. Semipermeable Membran nach Anspruch 1, dadurch gekennzeichnet, daß das modifizierte Vinylpolymere ein von Homopolymeren oder Kopolymeren des Vinylacetats abgeleitetes Vinylpolymeres ist.

4. Semipermeable Membran nach Anspruch 1, dadurch gekennzeichnet, daß das modifizierte Vinylpolymere durch die Formel

(III) 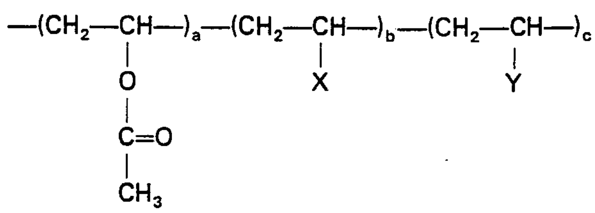

repräsentiert wird, wobei a, b und c die Molenbrüche sind und den folgenden Gleichungen:

$$a + b + c = 1$$

$$0{,}9 > a > 0{,}2$$

$$0{,}8 > b > 0{,}1$$

$$0{,}4 > c \geqq 0$$

gehorchen, wobei X mindestens ein Rest der Formeln (I) und/oder (II) und Y mindestens ein Rest der Gruppe —OH, —H, —Cl, —Br, —J, $—C_6H_5$ und

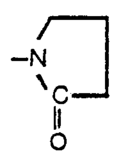

ist.

5. Semipermeable Membran nach Anspruch 4, dadurch gekennzeichnet, daß X mindestens ein Rest der durch die Formeln (A) bis (J) gemäß Anspruch 2, insbesondere die Formeln (A) und (B), repräsentierten Gruppe ist.

6. Semipermeable Membran nach Anspruch 4 oder 5, dadurch gekennzeichnet, daß Y —OH ist.

7. Semipermeable Membran nach Anspruch 4, dadurch gekennzeichnet, daß a, b und c den folgenden Gleichungen

$$0{,}8 > a > 0{,}4$$

$$0{,}4 > b > 0{,}1$$

$$0{,}2 > c \geqq 0$$

gehorchen.

8. Semipermeable Membran nach Anspruch 1, dadurch gekennzeichnet, daß das modifizierte Vinylpolymere von einem Polymeren aus der Gruppe Polyvinylacetat und/oder den Kopolymeren von Vinylacetat mit mindestens einem Komonomeren der Gruppe Äthylen, Vinylchlorid, Styrol und N-Vinylpyrrolidon und/oder deren teilweise oder vollständig verseiften Polymeren hergeleitet ist.

9. Semipermeable Membran nach Anspruch 1, dadurch gekennzeichnet, daß das modifizierte Vinylpolymere ein das Reaktionsprodukt von (a) Polyvinylacetat, seinen Kopolymeren und ihren teilweise oder vollständig verseiften Polymeren und (b) mindestens einer Verbindung der Gruppe der zweibasischen Säuren, der dreibasischen Säuren, der vierbasischen Säuren, ihren Säureanhydriden und ihren Säurechloriden enthaltendes Polymeres ist.

10. Semipermeable Membran nach Anspruch 1, dadurch gekennzeichnet, daß die semipermeable Membran Celluloseester enthält.

11. Semipermeable Membran nach Anspruch 1, dadurch gekennzeichnet, daß die semipermeable Membran Celluloseacetat oder ein Gemisch aus Celluloseacetet und einem anderen Celluloseester enthält.

12. Semipermeable Membran nach Anspruch 1, dadurch gekennzeichnet, daß die semipermeable Membran bei einem Betrieb bei 0,3 $N/mm^2$ mit einer 0,5% NaCl enthaltenden wäßrigen Lösung, bei einer Temperatur von 25°C und bei einem pH-Wert von 6 eine Sperrleistung von mindestens etwa 98,5% bis 99,0% aufweist.

13. Verfahren zur Herstellung einer semipermeable Membran zum Trennen von Flüssigkeiten gemäß oder mehreren der Ansprüche 1 bis 12, dadurch gekennzeichnet, daß man auf die Oberfläche einer aus einem Celluloseester bestehenden semipermeablen Membran eine wäßrige Lösung aufbringt, die ein modifiziertes Vinylpolymeres mit einer Acetoxygruppe und mindestens einer der durch die Formeln (I) und/oder (II) repräsentierten Gruppe enthält,

(I) $$-O\underset{\underset{O}{\|}}{C}-R-(COOH)_n$$

und

(II) $$-O-R-(COOH)_n$$

wobei R ein aliphatischer, aromatischer oder heterocyclischer Rest mit 1 bis 9 Kohlenstoffatomen und n eine ganze Zahl von 1 bis 3 ist.

14. Verfahren nach Anspruch 13, dadurch gekennzeichnet, daß die wäßrige Lösung etwa 0,0001 bis etwa 1 Gew.-%, vorzugsweise etwa 0,0003 bis 0,01 Gew.-%, des modifizierten Vinylpolymeren enthält.

15. Verfahren nach Anspruch 14, dadurch gekennzeichnet, daß die wäßrige Lösung einen pH-Wert von etwa 3 bis 9, vorzugsweise etwa 4 bis 8, aufweist.

16. Verfahren zum Verbessern der Salzsperrung bei einer aus Celluloseester hergestellten semipermeablen Membran durch Zusammenbringen der Membran mit einer wäßrigen Lösung, die ein modifiziertes Vinylpolymeres mit einer Acetoxygruppe und mindestens einer Gruppe der Formeln (I) oder (II) gemäß Anspruch 13 enthält.

17. Verwendung einer semipermeablen Membran bei einem Verfahren zum Entsalzen bon Salzwasser durch Umkehrosmose mit den Stufen (a) Zusammenbringen des Salzwassers unter Druck mit einer Umkehrosmosemembran aus Celluloseester Und (b) anschließende Behandlung der Umkehrosmosemembran nach dem Verfahren gemäß den Ansprüchen 13 bis 15 zur Wiedererlangung einer Salzsperrung der Membran von mindestens etwa 98%.

18. Verwendung eines Vinylpolymeren gemäß den Ansprüchen 1 bis 9 in effektiver Menge in einem Mittel zum Behandeln von semipermeablen Membranen zur Verbesserung der Sperrleistung und Reaktivierung der Membranen.

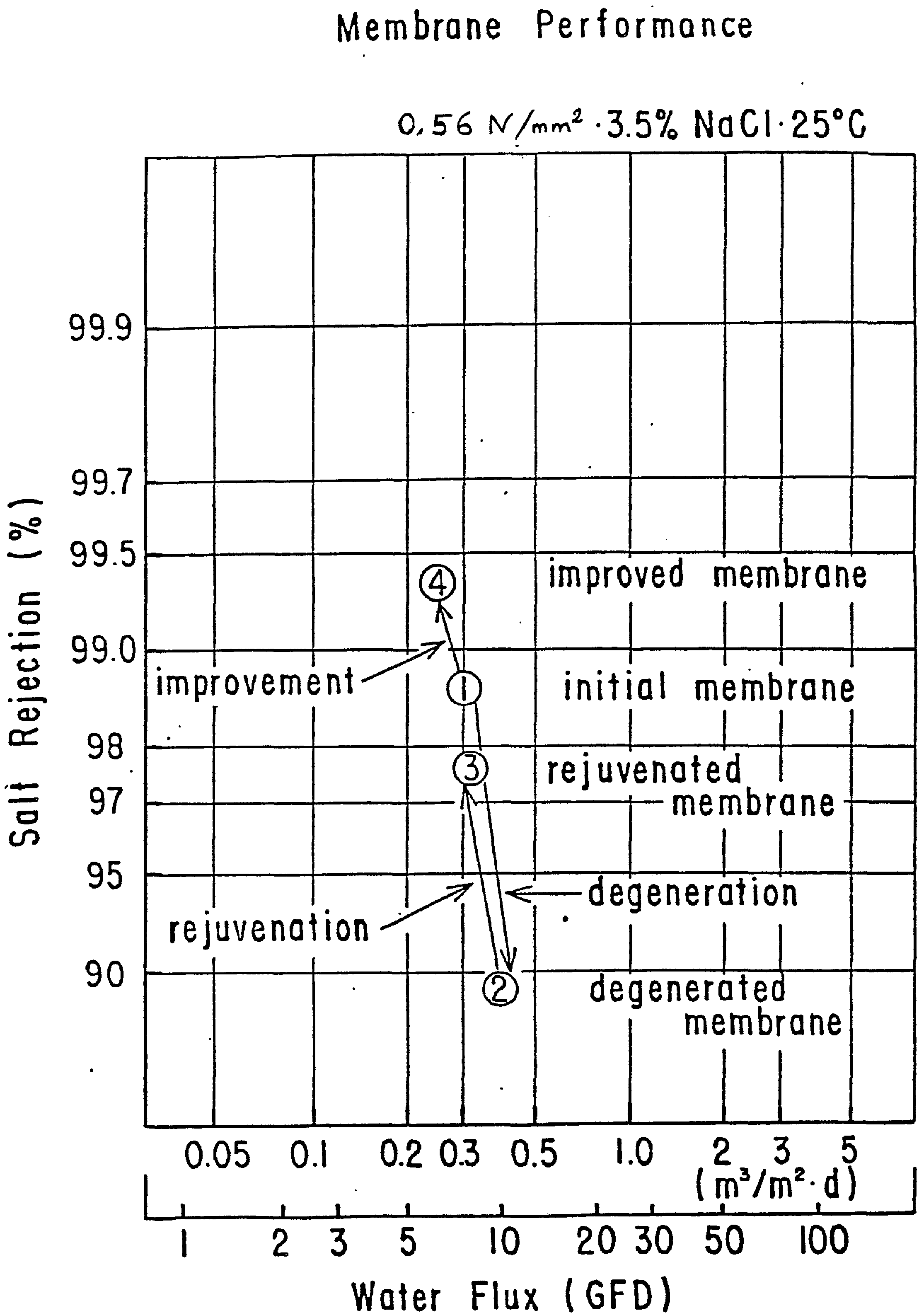

Membrane Performance
0,56 N/mm² ·3.5% NaCl·25°C
Salt Rejection (%)
99.9
99.7
99.5
99.0
98
97
95
90
improved membrane
initial membrane
rejuvenated membrane
degeneration
degenerated membrane
improvement
rejuvenation
4
1
3
2
0.05 0.1 0.2 0.3 0.5 1.0 2 3 5
(m³/m²·d)
1 2 3 5 10 20 30 50 100
Water Flux (GFD)